# EUROPEAN PATENT SPECIFICATION

(11) **EP 1 834 848 B1**
(45) Date of publication and mention of the grant of the patent: **20.07.2011**
(21) Application number: 07381015.2
(22) Date of filing: 01.03.2007
(51) Int. Cl.: B60R 21/239

(54) **Airbag with an adaptatively closable vent device**
Airbag mit adaptiv verschließbarer Entlüftungsvorrichtung
Airbag avec dispositif d'évent à fermeture adaptative

(30) Priority: 13.03.2006 ES 200600637
(43) Date of publication of application: 19.09.2007
(73) Proprietor: Dalphi Metal España, S.A., 28006 Madrid (ES)
(72) Inventor: Tavares da Silva Vinhas, Joana Francisca, DALPHIMETAL ESPAÑA, S.A., 1920-011, Vila Nova de Cerveira (PT); Razazi, Donia, 28042 Madrid (ES)
(74) Representative: Mehnert, Bernhard

(56) References cited:
- DE-B3-102004 014 681
- US-A- 5 931 497
- US-A- 6 139 048
- US-A1- 2004 012 179

## Description

### Field of the Invention

The present invention relates to an airbag vent device used in vehicles to absorb the blows suffered by drivers and passengers in the event of impacts or collisions.

### Background of the Invention

An airbag basically consist of a folded cushion which is quickly inflated by means of a gas produced by a generator when certain sensor devices detect a collision of the vehicle. In this way, the cushion deploys in front of the driver or a passenger, depending on their location, and prevents their bodies hitting any part of the vehicle.

In the normal cushion deploying operation, the internal pressure caused by the generator upon filling it with gas can be high enough to cause the cushion to be so hard that the occupant rebounds. To prevent this drawback, they have been provided with a vent hole serving to reduce the internal pressure of the cushion and consequently, the possibility of causing damage when they are activated.

In turn, the use of several means for blocking this vent hole to achieve a better control of the internal pressure in the cushion than that achieved only by the variation of the size of the hole is known. In this sense, the use of patches to achieve that the gas does not leave immediately through the discharge hole but when the patch breaks upon reaching a certain pressure inside the cushion is emphasized. The art has proposed different types of patches with different means for controlling their breakage, to a greater or lesser extent, according to a certain resistance to the gas pressure inside the cushion. In this way, the presence of the gas pressure necessary for the cushion to fulfill its protective function is compatibilized with the guarantee that the gas pressure will not reach an excessive value, with a risk for the persons on which the cushion is deployed.

On the other hand, the need has also risen for vent devices which allow increasing the gas outflow according to the specific characteristics of each collision and of the type of passenger affected and in this sense, several solutions of vent devices offering vent holes with an adjustable surface facilitating the increase of the vent area as the internal pressure inside the cushion increases are also known.

A new need which has also risen sets forth the need for airbags which allow reducing the vent area, even eliminating it completely in certain impact conditions which requires sealing means which must work in the opposite sense to the technique known to date. The aforementioned traditional patches had to completely block the outlet hole until the internal pressure of the gas in the cushion did not reach a certain level and afterwards they broke and stopped acting, now the opposite is required: devices which allow closing the vent hole when it is already open when the internal pressure of the cushion reaches certain levels.

Some proposals are known in this sense such as the ones described in patent ES 2182629, US patent 6139048 and patent application US 2004/0090054 using movable elements for closing the vent hole taking advantage of the stresses produced in the cushion, due to the pressure difference together with the difference in the occupant load form. The present invention proposes a solution for this purpose based on different principles.

Besides, US 5,931,497 describes an airbag device with an airbag cushion having a venting means located on the outside of the cushion.

### Summary of the Invention

The objective of the present invention is to obtain an airbag with a closable vent device which for highly severe collisions allows the partial or total closure of the vent hole after a first phase in which it is open expelling gas.

This objective is achieved by providing an airbag according to claim 1.

An advantage of the present invention is that the operation of the vent device depends on the internal pressure of the cushion which is very interesting given the possibilities for controlling this variable. The end product is more robust since it does not depend on other features such as stresses/deformations.

Another advantage of the present invention is that the internal pressure of the cushion is more stable as a parameter for controlling the operation of the vent device than other parameters depending on factors such as the manner in which the cushion is deployed or the placing of the occupant with respect to the cushion.

Other features and advantages of the present invention will be disclosed in the following description of an illustrative and in no case limiting embodiment of the object thereof in relation to the attached drawings.

### Description of the Drawings

Figures 1 and 2 shows schematic elevational views of a cushion of an airbag with a device for closing a vent hole according to a first embodiment of the invention before and after reaching a predetermined pressure (Pt) inside the cushion.
Figures 3 and 4 show schematic elevational views of a cushion of an airbag with a device for closing a vent hole according to a second embodiment of the invention before and after reaching a predetermined pressure (Pt) inside the cushion.

### Detailed Description of the Invention

In the two embodiments of the invention shown in the figures, the closing device 21 for closing the vent hole 13 of the cushion 11 comprises a fabric part 23 fixed to the cushion 11 in the periphery of the vent hole by means of seams 27 or another suitable fixing means.

The part 23 has at least one hole 25 to allow the passage of gas to the vent hole 13 during the deployment of the cushion which takes place when a collision occurs while the pressure inside the cushion does not reach a predetermined limit Pt.

The device 21 includes a mechanism keeping the part 23 separated from the cushion 11, supporting the pressure exerted by the gas emitted by the generator, until the pressure Pt is reached. Then this mechanism is inactivated and the part 23 adheres to the cushion 11 preventing the outflow of gas completely if the hole 25 is not located in front of the vent hole 13 or partially if it is located such that it partially coincides with the vent hole 13 when the part 23 is adhered to the cushion 11.

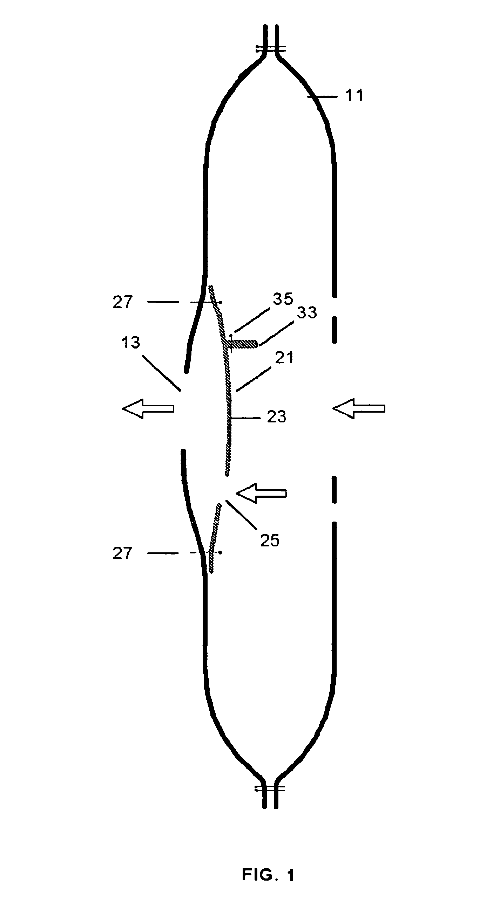

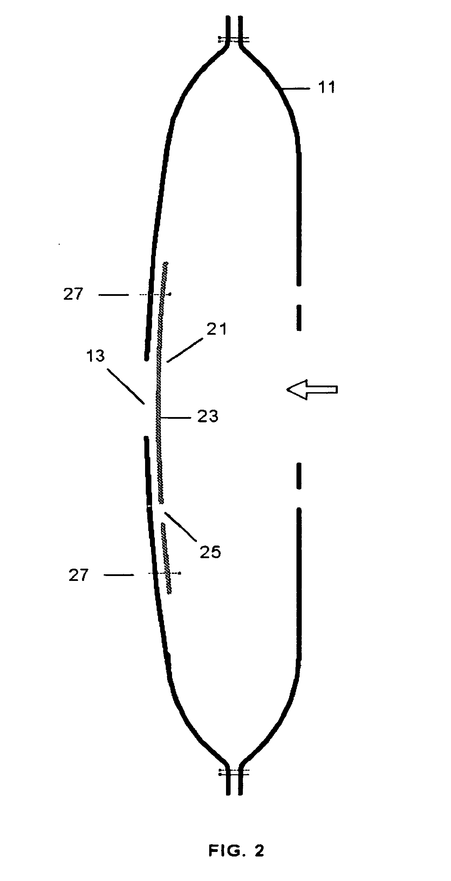

In the first embodiment of the invention shown in Figures 1 and 2, this mechanism is formed by a clamp 33 made in the part 23 by means of a seam 35 which, when the area of the part 23 decreases, allows the separation thereof from the cushion 11 and which is made such that it is torn off when the internal pressure inside the cushion reaches the predetermined value Pt.

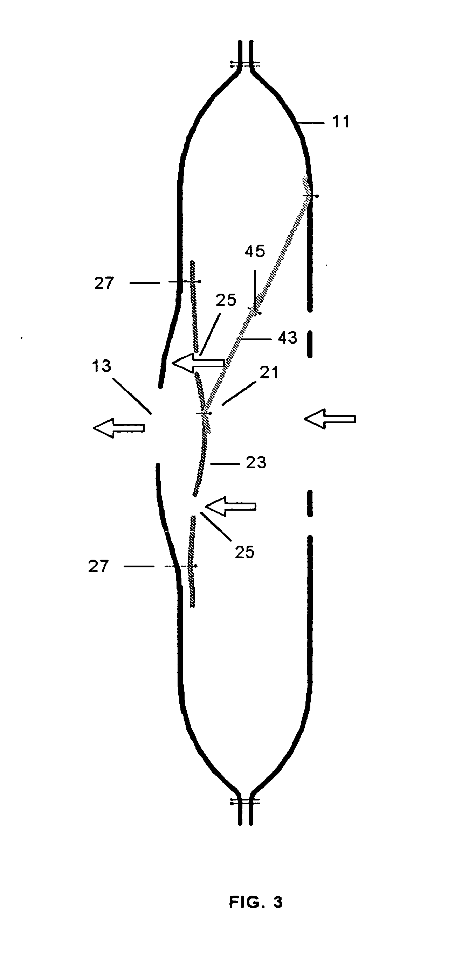

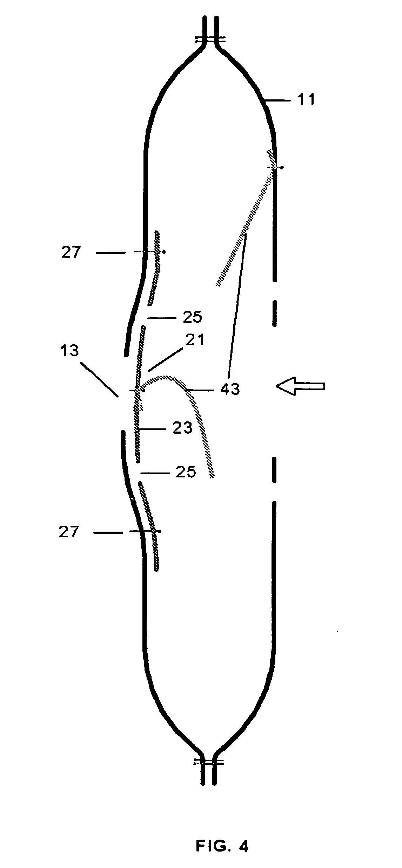

In the second embodiment of the invention shown in Figures 3 and 4, the mechanism consists of a strap 43 fixed at one end to the part 23 and at the other end to the cushion 11 including tear-off means 45 provided for being torn off when the internal pressure in the cushion reaches the predetermined value Pt. The tear-off means 45 can be a tear-off seam or a pre-cut. When the pressure rises inside the cushion 11, the gas exerts a stress on the part 23 which is secured to a panel of the cushion 11 by the strap 43, until the latter breaks, releasing the part 23 so that it completely or partially closes the vent hole 13 when it adheres to the cushion 11.

The following are emphasized among the advantages of the present invention.
- Making an airbag cushion which can allow the passage of more or less gas according to the specifications without the need for additional components such as sensors. The airbag is adjusted independently.
- Achieving the biomechanical criteria by allowing the passage of gas for impacts against barriers and preventing bottoming out in the event of impacts against posts by closing the vent device.
- Achieving biomechanical criteria in the event of more severe side impacts.
- Having a cushion with a different pressure according to the size of the person, softer cushion with a 5^{th} percentile (low pressure) than with a 95^{th} percentile (high pressure).
- Being able to use any type of folding since the vent device is not damaged.

Although several embodiments of the invention have been described and shown, it is evident that modifications comprised within the scope thereof can be introduced therein, and the latter must not be considered limited to said embodiments but to the contents of the following claims.

## Claims

1. An airbag comprising an inflatable cushion (11) inflatable with gas produced by a generator when a collisions occurs, said airbag having a vent hole (13) made in the inflatable cushion (11), said cushion (11) comprising a device (21) including a part (23) made of flexible material, said part (23) comprising at least one hole (25), said device (21) having a surface that is greater than a portion of the surface of the cushion (11) which is delimited by the fixing points (27) of the part (23) to the cushion (11), **characterized in that** said device (21) is fixed to the inside of the inflatable cushion (11) in the periphery of the vent hole (13) and **in that** said device (21) further comprising means keeping said part (23) separated from the cushion (11) when the internal pressure in the cushion (11) is lower than a predetermined limit (Pt) preventing it from closing the vent hole (13), said means being configured to become inactive when the internal pressure in the cushion (11) exceeds said predetermined limit (Pt) such that it completely or partially closes the vent hole (13) of the cushion (11) when said part (23) adheres to the cushion (11) due to the effect of the pressure;.

2. Airbag according to claim 1, **characterized in that** said means consists of at least one clamp (33) made in the part (23) with a tear-off seam (35).

3. Airbag according to claim 1, **characterized in that** said means consists of at least one strap (43) joined at one of its ends to the part (23) and at the other end to the inside of the inflatable cushion (11) provided with tear-off means (45).

4. Airbag according to any of the claims 1 to 3, **characterized in that** none of the at least one hole (25) of said part (23) is located opposite to the vent hole (13) of the cushion (11) such that when the internal pressure of the cushion (11) exceeds the predetermined limit (Pt) a complete closing of the vent hole (13) occurs.

5. Airbag according to any of the claims 1 to 3, **characterized in that** said part (23) has at least one hole (25) opposite to the vent hole (13) of the cushion (11) such that when the internal pressure of the cushion exceeds the predetermined limit (Pt) a partial closing of the vent hole (13) occurs.

## Patentansprüche

1. Airbag mit einem aufblasbaren Kissen (11), das im Falle eines Zusammenstoßes mit einem von einem Generator produzierten Gas aufblasbar ist, wobei der Airbag eine in dem aufblasbaren Kissen (11) vorgesehene Entlüftungsöffnung (13) aufweist, wobei das Kissen (11) eine Vorrichtung (21) mit einem aus elastischem Material hergestellten Teil (23) umfasst und dieses Teil (23) mindestens ein Loch (25) umfasst, wobei die Vorrichtung (21) eine Oberfläche aufweist, die größer als ein Abschnitt der Oberfläche des Kissens (11) ist, welche durch die Befestigungspunkte (27) des Teils (23) an dem Kissen (11) begrenzt ist, **dadurch gekennzeichnet, dass** die Vorrichtung (21) an der Innenseite des aufblasbaren Kissens (11) im Umfangsbereich der Entlüftungsöffnung (13) befestigt ist und dass die Vorrichtung (21) weiterhin eine Einrichtung umfasst, die das Teil (23) von dem Kissen (11) getrennt hält, wenn der Innendruck in dem Kissen (11) unter einem vorgegebenen Grenzwert (Pt) liegt, und somit verhindert, dass es die Entlüftungsöffnung (13) verschließt, wobei die Einrichtung derart ausgeführt ist, dass sie inaktiv wird, wenn der Innendruck in dem Kissen (11) den vorgegebenen Grenzwert (Pt) überschreitet, so dass sie die Entlüftungsöffnung (13) des Kissens (11) vollständig oder teilweise verschließt, wenn das Teil (23) aufgrund der Druckwirkung an dem Kissen (11) anhaftet.

2. Airbag gemäß Anspruch 1, **dadurch gekennzeichnet, dass** die Einrichtung aus mindestens einer in dem Teil (23) ausgebildeten Klammer (33) mit einer Abreißnaht (35) besteht.

3. Airbag gemäß Anspruch 1, **dadurch gekennzeichnet, dass** die Einrichtung aus mindestens einem Riemen (43) besteht, der an seinem einen Ende mit dem Teil (23) und an dem anderen Ende mit der mit Abreißeinrichtungen (45) versehenen Innenseite des aufblasbaren Kissens (11) verbunden ist.

4. Airbag gemäß einem der Ansprüche 1 bis 3, **dadurch gekennzeichnet, dass** keines des mindestens einen Loches (25) des Teils (23) gegenüber der Entlüftungsöffnung (13) des Kissens (11) angeordnet ist, so dass, wenn der Innendruck des Kissens (11) den vorgegebenen Grenzwert (Pt) überschreitet, die Entlüftungsöffnung (13) vollständig verschlossen wird.

5. Airbag gemäß einem der Ansprüche 1 bis 3, **dadurch gekennzeichnet, dass** das Teil (23) mindestens eine Öffnung (25) gegenüber der Entlüftungsöffnung (13) des Kissens (11) aufweist, so dass, wenn der Innendruck des Kissens den vorgegebenen Grenzwert (Pt) überschreitet, die Entlüftungsöffnung (13) teilweise verschlossen wird.

## Revendications

1. Un airbag comprenant un coussin gonflable (11) se gonflant avec du gaz produit par un générateur lors d'une collision, ledit airbag ayant un évent (13) réalisé dans le coussin gonflable (11), ledit coussin (11) comprenant un dispositif (21) incluant une partie (23) faite d'un matériau souple, ladite partie (23) comprenant au moins un orifice (25), ledit dispositif (21) ayant une surface plus grande qu'une portion de la surface du coussin (11) qui est délimitée par les points de fixation (27) de la partie (23) sur le coussin (11), **caractérisé en ce que** ledit dispositif (21) est fixé à l'intérieur du coussin gonflable (11) à la périphérie de l'évent (13) et **en ce que** ledit dispositif (21) comprenant de plus des moyens pour maintenir ladite partie (23) séparée du coussin (11) lorsque la pression interne dans le coussin (11) est inférieure à une limite prédéterminée (Pt) l'empêchant de fermer l'évent (13), lesdits moyens étant configurés de manière à devenir inactifs lorsque la pression interne dans le coussin (11) dépasse la limite prédéterminée (Pt) de sorte qu'il ferme complètement ou partiellement l'évent (13) du coussin (11) quand ladite partie (23) adhère au coussin (11) en raison de l'effet de la pression.

2. Airbag selon la revendication 1, **caractérisé en ce que** ledit moyen est constitué d'au moins une pince (33) réalisée dans la partie (23) avec une couture fusible (35).

3. Airbag selon la revendication 1, **caractérisé en ce que** ledit moyen est constitué d'au moins une sangle (43) jointe à une de ses extrémités à la partie (23) et à l'autre extrémité à l'intérieur du coussin gonflable (11) fourni avec les moyens fusibles (45).

4. Airbag selon l'une quelconque des revendications 1 à 3, **caractérisé en ce qu'**aucun des orifices d'au moins un orifice (25) de ladite partie (23) est situé en face de l'évent (13) du coussin (11) de telle sorte que lorsque le pression interne du coussin (11) dépasse la limite prédéterminée (Pt), une fermeture complète de l'évent (13) se produit.

5. Airbag selon l'une quelconque des revendications 1 à 3, **caractérisé en ce que** ladite partie (23) a au moins un orifice (25) en face de l'évent (13) du coussin (11) de telle sorte que lorsque la pression interne du coussin dépasse le limite prédéterminée (Pt), une fermeture partielle de l'évent (13) se produit.
